# EUROPEAN PATENT SPECIFICATION

(11) **EP 0 677 084 B1**
(45) Date of publication and mention of the grant of the patent: **04.03.1998**
(21) Application number: 94903887.1
(22) Date of filing: 28.12.1993
(51) Int. Cl.: C08L 67/02

(54) **TOUGHENED POLYESTER COMPOSITION**
ZÄHE POLYESTERZUSAMMENSETZUNG
COMPOSITION DE POLYESTER RENFORCEE

(30) Priority: 30.12.1992 US 998206
(43) Date of publication of application: 18.10.1995
(73) Proprietor: SHELL INTERNATIONALE RESEARCH MAATSCHAPPIJ B.V., 2596 HR Den Haag (NL)
(72) Inventor: MODIC, Michael, John, Houston, TX 77077 (US)
(86) International application number: PCT/EP93/03728
(87) International publication number: WO 94/16013

(56) References cited:
- EP-A- 0 409 580
- PATENT ABSTRACTS OF JAPAN vol. 14, no. 014 (C-674)12 January 1990 & JP,A,01 256 560 (ASAHI CHEM IND CO LTD) 13 October 1989

## Description

This invention relates to a toughened polyester composition comprising a polyester and a functionalized elastomer.

Polyesters have excellent mechanical properties, but are relatively brittle at low temperatures. U.S. Patent 4,657,971 discloses the use of modified, hydrogenated block copolymers of styrene and conjugated dienes as impact modifiers for polymer blends containing polyesters. The block copolymers may be modified with a variety of acid groups or derivatives of the acid groups.

Blends of polyesters and modified elastomers were shown to have excellent room temperature properties in European Patent Application No. 211,467. However, the blends described in this patent application do not exhibit a particularly good impact strength at -20 °C, thus precluding the use of these blends in automobiles and other items which may be exposed to extreme cold temperatures.

It has now surprisingly been discovered that the low temperature impact strength of polyesters is significantly and unexpectedly improved by blending the polyester with a modified elastomer comprising a hydrogenated conjugated diene having a star configuration, a low polystyrene content, if any, and grafted epoxy groups. The blends of the invention comprise from 60% to 90% of the polyester and exhibit ductile failure at -20 °C.

Accordingly, the present invention relates to a toughened polyester composition having an Izod impact strength at -20 °C of at least 5.3 J/cm as determined by ASTM-D256 comprising:
(a) 10 to 40% by weight of a hydrogenated conjugated diene polymer having a star structure and a residual ethylenic unsaturation of less than 10%, preferably less than 2%, and
(b) 90 to 60% by weight of a polyester,
wherein the hydrogenated conjugated diene polymer has been modified by grafting thereon an effective amount from 1.0% to 10% by weight of a grafting compound containing α,β-ethylenic unsaturation and at least one epoxy group.

The polyesters which may be used in the toughened polyester composition according to the present invention, are thermoplastic polyesters and include those polyesters described in European Patent Application No. 0,211,467. Accordingly specific examples are polycaprolactones, polypivalolactones, cellulose esters and polyalkylene terephthalates, the latter being a preferred class of polyesters. Particularly preferred are the polybutylene terephthalate (PBT) polyesters. These PBT polyesters have the general formula: 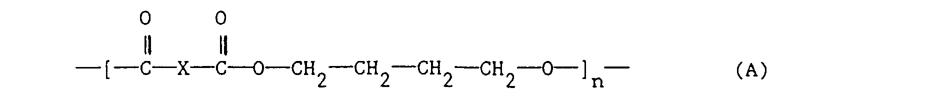 wherein n is sufficient to provide an engineering thermoplastic polymer and X comprises one or more phenylene or substituted phenylene groups. Preferably, X is non-substituted p-phenylene. The number average molecular weight of the PBT typically varies from 15,000 to 50,000, preferably from 25,000 to 50,000.

The preparation of PBT is well known and commercially available PBT is used in the examples. The conventional process is the condensation reaction of 1,4-butanediol and terephthalic acid or dimethylterephthalate. A suitable process for making the PBT is described in British patent specification 1,305,130.

PBT is commercially available from e.g. General Electric (VALOX thermoplastic polyester) and Hoechst-Celanese (CELANEX polyester). VALOX and CELANEX are trade marks.

The modified conjugated diene polymers are produced by free radical grafting of a hydrogenated conjugated diene polymer having a star structure with a grafting compound comprising alpha-beta ethylenic unsaturation and at least one epoxy group. The grafting compound is preferably glycidyl acrylate or glycidyl methacrylate, of which glycidyl acrylate is most preferred.

The star-shaped, hydrogenated conjugated diene polymer useful in the composition according to the present invention suitably contains at least 95% by weight of conjugated diene prior to hydrogenation. Suitable polymers include selectively hydrogenated conjugated diene block copolymers of the general formula

(A-B)ₙ(B)ₘX

wherein A is a polystyrene block having a peak molecular weight of less than 15,000, B is a polymer block of hydrogenated conjugated diene having a peak molecular weight in the range of from 15,000 to 50,000, X is a block of divinylbenzene and n and m are integers of 0 or higher, the sum of n and m being at least 10. Most preferably n equals zero and m is at least 10. Preferably, B is a block of hydrogenated polyisoprene, n is equal to zero and m is at least 10.

The block of the bisunsaturated coupling agent divinylbenzene generally constitutes less than 2% by weight of the polymer. The styrene blocks improve handling of the base polymer, if present, but do not enhance impact properties. Higher polystyrene content reduces the impact strength of the blends.

The preferred conjugated diene blocks are hydrogenated polybutadiene or hydrogenated polyisoprene. The hydrogenated polybutadiene or polyisoprene blocks preferably have a residual unsaturation less than 2%. Hydrogenation may be effected by any known technique, e.g. by the process disclosed in U.S. Patent No. 27,145.

The bisunsaturated coupling agent divinylbenzene is preferably added after polymerization of living polymers of the conjugated diene. A ratio of divinylbenzene to living polymer of 3:1 is preferred to accomplish an average of at least 10 polymeric arms per molecule as measured by gel permeation chromotagraphy in combination with a light scattering detector.

The epoxy grafting compounds such as glycidyl acrylate or glycidyl methacrylate are grafted to the base block copolymer in an amount within the range from 1.0% to 10% by weight of the block copolymer, preferably from 1.5% to 5% by weight. Lower levels of functionality are ineffective in improving the low temperature toughness of the polyester.

The base block copolymer may be functionalized using the known processes, such as those described in U.S. Patents Nos. 5,066,726; 4,033,888; 4,077,893; 4,670,173; 4,427,828; 4,578,429 and 4,628,072.

The compositions prepared according to the present invention may incorporate other components known in the art to be useful in polyester compositions. These other components include, for example, fillers, pigments, antioxidants, stabilizers, processing oils, extenders and mold release agents.

The polyester compositions according to the present invention have an improved impact strength at -20 °C of at least 5.3 J/cm (10 ft-lb/in) and exhibit ductile failure during testing as shown in the following examples.

### Examples

Polyester compositions were prepared by blending VALOX 310 polyester, a commercially available polybutylene terephthalate (PBT) polyester having a number average molecular weight of 32,500, with several isoprene and butadiene polymers having grafted glycidyl acrylate or maleic anhydride for comparative purposes.

### Example 1

A star hydrogenated isoprene block copolymer was conventionally prepared by polymerizing living polymeric arms of isoprene having a peak molecular weight of 35,000, coupling the arms with divinylbenzene, and hydrogenating the polymerized isoprene. The residual unsaturation of the star polymer was reduced to less than 2% of the original aliphatic unsaturation.

The star block copolymer was processed on a 25 mm Berstorff co-rotating twin screw extruder connected to a vacuum devolatilization unit. Prior to addition to the feed throat of the extruder, the polymer was tumbled with 3.0% by weight of glycidyl acrylate and 0.2% by weight of the peroxide (Luperox 101). The melt temperature of the extruder was 223 °C, and the extruder screw speed was 300 RPM (Rotations Per Minute).

To prepare the polymer for analysis, the modified block copolymer was dissolved in tetrahydrofuran, coagulated into isopropanol, and then washed with water. The modified polymer sample was analyzed for bound glycidyl acrylate content. The modified star polymer was found to contain 2.4% by weight glycidyl acrylate.

The modified block copolymer was blended at 20% by weight loading with PBT polyester (VALOX 310 polyester) in a 25 mm Berstorff co-rotating twin screw extruder. The extruder screw speed was 300 RPM and the melt temperature reached was about 295 °C for the blend. Pellets from the resulting blend were injection molded into test specimens on a 0.59 ton/g (25 ton/1.5 oz). Arburg injection molding machine. Each of the blends was tested for its impact strength (ASTM D-256) at room temperature (RT) and at low temperatures and tested for its flexural modulus (ASTM D-790). Table 1 gives the test results for comparing Example 1 of the present invention to the following comparison examples.

**TABLE 1**

| | 0.317 cm (1/8") Notched Izod in J/cm (ft-lb/2.54 cm (in))* | | | | | | Flex Mod in | |
|---|---|---|---|---|---|---|---|---|
| Sample ID | RT | | -20°F | | -40°F | | katm (kbar) | (psi) |
| Ex. 1 | 10.8 | (20.2) | 7.7 | (14.4) | 2.3 | (4.4) | 18.0 (17.6) | (255,000) |
| Comp. Ex. 1 | 2.1 | (3.9) | 0.64 | (1.2) | | --- | 14.4 (14.1) | (205,000) |
| Comp. Ex. 2 | 10.6 | (19.8) | 1.7 | (3.2) | 1.6 | (3.0) | 19.4 (19.0) | (275,000) |
| Comp. Ex. 3 | 8.3 | (15.6) | 1.3 | (2.4) | | --- | 18.8 (18.4) | (267,000) |

| | | | | | | | | |
|---|---|---|---|---|---|---|---|---|
| *All sample having an impact strength above 7.5 J/cm (14.0 ft-lb/2.54 cm (in)) exhibited ductile failure. | | | | | | | | |

### Comparative Example 1

The star hydrogenated isoprene base polymer of Example 1 was grafted with maleic anhydride in a 5.08 cm (2") VEI counter-rotating twin screw extruder equipped with two injection ports and a vacuum devolatilization unit. In the first injection port was added maleic anhydride (2.5% by weight based on the polymer feed rate). Through the second injection port was added a 50/50 mixture of mineral oil and 2,5-dimethyl-2,5-di(t-butylperoxy)hexane (Luperox 101, 0.25% by weight based on polymer feed rate). The melt temperature of the polymer reached 280 °C and the extruder screw speed was 200 RPM.

To prepare the polymer for analysis, the modified block copolymer was dissolved in tetrahydrofuran, coagulated into isopropanol, and then washed with water. The modified polymer sample was analyzed for bound maleic anhydride content. The star polymer was found to contain 2.0% by weight maleic anhydride.

The modified block copolymer was blended at 20% by weight loading with the PBT polyester of Example 1 in a 33 mm Werner-Pfleiderer twin screw extruder. The extruder screw speed was 300 RPM and the melt temperature reached was from 305-312 °C for the various blends. Pellets from the resulting blend were injection molded into test specimens on a 0.59 ton/g (25 ton/1.5 oz.) Arburg injection molding machine. Each of the blends was tested for its impact strength (ASTM D-256) at room temperature (RT) and at low temperatures and tested for its flexural modulus (ASTM D-790). Table 1 gives the test results for comparison of Comparative Example 1 with Example 1 according to the present invention.

### Comparative Example 2

A linear block copolymer having 70% by weight styrenebutadiene-styrene (S-B-S) and 30% by weight styrene-butadiene (S-EB) was conventionally prepared by polymerizing blocks of styrene having a peak molecular weight of 5,300 and blocks of butadiene having a peak molecular weight of 36,500, coupling 70% of the living polymers with methyl benzoate, and hydrogenating the polymerized butadiene. The residual unsaturation of the polymer was reduced to less than 2% of the original aliphatic unsaturation.

The linear block copolymer was processed on a 25 mm Berstorff co-rotating twin screw extruder connected to a vacuum devolatilization unit. Prior to addition to the feed throat of the extruder, the polymer was tumbled with 3.0% by weight of glycidyl acrylate and 0.2% by weight of the peroxide Luperox 101. The melt temperature of the extruder was 232 °C, and the extruder screw speed was 300 RPM. The modified polymer was found to contain 2.4%w of glycidyl acrylate.

The modified block copolymer was blended at 20% by weight loading with the PBT polyester of Example 1 in a 25mm Berstorff co-rotating twin screw extruder. The extruder screw speed was 300 RPM and the melt temperature reached was 292 °C for the blend. Pellets from the resulting blend were injection molded into test specimens on a 0.59 ton/g (25 ton/1.5 oz.) Arburg injection molding machine. Each of the blends was tested for its impact strength (ASTM D-256) at room temperature (RT) and at low temperatures and tested for its flexural modulus (ASTM D-790). Table 1 gives the test results for comparing Comparative Example 2 to Example 1 of the present invention.

### Comparative Example 3

A linear block copolymer having the structure butadienestyrene (S-B-S) was conventionally prepared by polymerizing blocks of styrene having a peak molecular weight of 7,500, blocks of butadiene having a peak molecular weight of 35,000, and blocks of styrene having peak molecular weights of 7,500, and then hydrogenating the polymerized butadiene. The residual unsaturation of the polymer was reduced to less than 2% of the original aliphatic unsaturation.

The linear block copolymer was processed on a 25mm Berstorff co-rotating twin screw extruder connected to a vacuum devolatilization unit. Prior to addition to the feed throat of the extruder, the polymer was tumbled with 3.0% by weight of glycidyl acrylate and 0.2% by weight of the peroxide Luperox 101. The melt temperature of the extruder was 241 °C, and the extruder screw speed was 300 RPM. The modified polymer was found to contain 2.2%w of glycidyl acrylate.

The modified block copolymer was blended at 20% by weight loading with the PBT polyester of Example 1 in a 25mm Berstorff co-rotating twin screw extruder. The extruder screw speed was 300 RPM and the melt temperature reached was 298 °C for the blend. Pellets from the resulting blend were injection molded into test specimens on a 0.59 ton/g (25 ton/1.5 oz.) Arburg injection molding machine. Each of the blends was tested for its impact strength (ASTM D-256) at room temperature (RT) and at low temperatures and tested for its flexural modulus (ASTM D-790). Table 1 gives the test results for comparing Comparative Example 3 to Example 1 of the present invention.

The results in Table 1 show that toughening of PBT with a star polymer grafted with an epoxy containing compound (Example 1) leads to improved low temperature impact strength in comparison to either blends containing the maleated star polymer (Comparative Example 1) or linear block copolymers containing glycidyl acrylate (Comparative Examples 2 and 3).

## Claims

1. A toughened polyester composition having an Izod impact strength at -20 °C of at least 5.3 J/cm (10 ft-lb/in) as determined by ASTM-D256 comprising:
(a) 10 to 40% by weight of a hydrogenated conjugated diene polymer having a star structure and a residual ethylenic unsaturation of less than 10%, and
(b) 90 to 60% by weight of a polyester,
wherein the hydrogenated conjugated diene polymer has been modified by grafting thereon from 1.0% to 10% by weight of a grafting compound containing α,β-ethylenic unsaturation and at least one epoxy group.

2. A composition according to claim 1, wherein the hydrogenated conjugated diene polymer has a residual ethylenic unsaturation of less than 2%.

3. A composition according to claim 1 or 2, wherein the hydrogenated conjugated diene polymer contains at least 95% by weight of conjugated diene prior to hydrogenation.

4. A composition according to any one of claims 1 to 3, wherein the hydrogenated conjugated diene polymer is a block copolymer of the general formula
(A-B)ₙ(B)ₘX
wherein A is a polystyrene block having a peak molecular weight of less than 15,000, B is a polymer block of hydrogenated conjugated diene having a peak molecular weight in the range of from 15,000 to 50,000, X is a block of divinylbenzene and n and m are integers of 0 or higher, the sum of n and m being at least 10.

5. A composition according to claim 4, wherein B is a block of hydrogenated polyisoprene, n is equal to zero and m is at least 10.

6. A composition according to any one of claims 1 to 5, wherein the polyester is a polybutylene terephthalate ester.

7. A composition according to any one of claims 1 to 6, wherein the grafting compound is selected from glycidyl acrylate and glycidyl methacrylate.

8. A composition according to any one of claims 1 to 7, wherein the grafting compound is present in the hydrogenated conjugated diene polymer in an amount of from 1.5 to 5% by weight.

## Patentansprüche

1. Zähgemachte Polyesterzusammensetzung mit einer Izod-Schlagzähigkeit bei -20°C von wenigstens 5,3 J/cm (10 ft-lb/in), bestimmt gemäß ASTM-D256, umfassend:
(a) 10 bis 40 Gew.-% eines hydrierten, konjugierten Dienpolymers mit sternförmiger Struktur und einer restlichen ethylenischen Unsättigung von weniger als 10 %, vorzugsweise weniger als 2 %, und
(b) 90 bis 60 Gew.-% eine Polyesters,
worin das hydrierte, konjugierte Dienpolymer durch Aufpfropfen von 1,0 bis 10 Gew.-% einer Pfropfverbindung, die eine α,β-ethylenische Unsättigung und wenigstens eine Epoxygruppe enthält, modifiziert worden ist.

2. Zusammensetzung nach Anspruch 1, worin das hydrierte, konjugierte Dienpolymer eine restliche ethylenische Unsättigung von weniger als 2 % aufweist.

3. Zusammensetzung nach Anspruch 1 oder 2, worin das hydrierte, konjugierte Dienpolymer wenigstens 95 Gew.-% konjugiertes Dien vor der Hydrierung enthält.

4. Zusammensetzung nach einem der Ansprüche 1 bis 3, worin das hydrierte, konjugierte Dienpolymer ein Blockcopolymer mit der allgemeinen Formel
(A-B)ₙ(B)ₘX
ist, worin A ein Polystyrolblock mit einem Peak-Molekulargewicht von unter 15.000 ist, B ein Polymerblock aus hydriertem, konjugiertem Dien mit einem Peak-Molekulargewicht im Bereich von 15.000 bis 50.000 ist, X ein Block aus Divinylbenzol ist und n und m ganze Zahlen von 0 oder darüber sind, wobei die Summe aus n und m wenigstens 10 beträgt.

5. Zusammensetzung nach Anspruch 4, worin B ein Block aus hydriertem Polyisopren ist, n den Wert 0 hat und m wenigstens 10 beträgt.

6. Zusammensetzung nach einem der Ansprüche 1 bis 5, worin der Polyester ein Polybutylenterephthalatester ist.

7. Zusammensetzung nach einem der Ansprüche 1 bis 6, worin die Pfropfverbindung unter Glycidylacrylat und Glycidylmethacrylat ausgewählt ist.

8. Zusammensetzung nach einem der Ansprüche 1 bis 7, worin die Pfropfverbindung in dem hydrierten, konjugierten Dienpolymer in einer Menge von 1,5 bis 5 Gew.-% vorliegt.

## Revendications

1. Composition de polyester tenace, possédant une résistance au choc Izod à -20°C d'au moins 5,3 J/cm (10 ft-lb/in), comme déterminé selon la norme ASTM-D256, qui comprend :
(a) 10 à 40% en poids d'un polymère de diène conjugué hydrogéné, possédant une structure radiale ou en étoile et une insaturation éthylénique résiduelle inférieure à 10%, de préférence, inférieure à 2% et
(b) 90 à 60% en poids de polyester,
où le polymère de diène conjugué hydrogéné a été modifié en greffant sur celui-ci, une proportion efficace de 1,0% à 10% en poids d'un composé de greffage contenant une insaturation α,β-éthylénique et au moins un groupe époxy.

2. Composition suivant la revendication 1, caractérisée en ce que le polymère de diène conjugué hydrogéné possède une insaturation éthylénique résiduelle inférieur à 2%.

3. Composition suivant la revendication 1 ou 2, caractérisée en ce que le polymère de diène conjugué hydrogéné contient au moins 95% en poids de diène conjugué avant hydrogénation.

4. Composition suivant l'une quelconque des revendications 1 à 3, caractérisée en ce que le polymère de diène conjugué hydrogéné est un copolymère séquencé de la formule générale
(A-B)ₙ(B)ₘX
dans laquelle A représente une séquence de polystyrène possédant un poids moléculaire pic inférieur à 15.000, B est une séquence de polymère d'un diène conjugué hydrogéné possédant un poids moléculaire pic qui varie de 15.000 à 50.000, X représente une séquence de divinylbenzène et n et m sont des nombres entiers égaux à 0 ou supérieurs à 0, la somme de n et de m étant au moins égale à 10.

5. Composition suivant la revendication 4, caractérisée en ce que B est une séquence de polyisoprène hydrogéné, n est égal à zéro et m est au moins égal à 10.

6. Composition suivant l'une quelconque des revendications 1 à 5, caractérisée en ce que le polyester est un ester de poly(téréphtalate de butylène).

7. Composition suivant l'une quelconque des revendications 1 à 6, caractérisée en ce que l'on choisit le composé de greffage parmi l'acrylate de glycidyle et le méthacrylate de glycidyle.

8. Composition suivant l'une quelconque des revendications 1 à 7, caractérisée en ce que le composé de greffage est présent dans le polymère de diène conjugué hydrogéné en une proportion de 1,5 à 5% en poids.
